# EUROPÄISCHE PATENTSCHRIFT

(11) **EP 2 078 100 B1**
(45) Veröffentlichungstag und Bekanntmachung des Hinweises auf die Patenterteilung: **22.10.2014**
(21) Anmeldenummer: 07802364.5
(22) Anmeldetag: 19.09.2007
(51) Int. Cl.: C21D 7/06, B23P 9/04, B23P 15/32

(54) **VERFAHREN ZUR ERHÖHUNG DER BRUCHZÄHIGKEIT DER RANDSCHICHT EINER HARTMETALLSCHNEIDE EINES BOHRERS**
METHOD FOR INCREASING THE FRACTURE TOUGHNESS OF THE OUTER LAYER OF A CARBIDE CUTTING EDGE OF A DRILL
PROCÉDÉ D'AUGMENTATION DE LA TÉNACITÉ À LA RUPTURE DE LA COUCHE DE BORDURE D'UNE LAME EN MÉTAL DUR D'UN FORET

(30) Priorität: 28.09.2006 DE 102006046263
(43) Veröffentlichungstag der Anmeldung: 15.07.2009
(73) Patentinhaber: HILTI Aktiengesellschaft, 9494 Schaan (LI)
(72) Erfinder: PFEIFFER, Wulf, 79331 Teningen (DE); CRAMER, Till, CH-9473 Gams (CH); GLASER, Arno, 9490 Vaduz (LI)
(74) Vertreter: Hilti Aktiengesellschaft Corporate Intellectual Property
(86) Internationale Anmeldenummer: PCT/EP2007/008168
(87) Internationale Veröffentlichungsnummer: WO 2008/037387

(56) Entgegenhaltungen:
- DE-A1- 19 652 872
- GB-A- 1 360 221
- JP-A- 2 254 144
- JP-A- 9 174 435
- US-A- 3 573 023
- US-A- 6 153 023

## Beschreibung

### Technisches Gebiet

Die Erfindung bezieht sich auf ein Verfahren zur Erhöhung der Bruchzähigkeit der Randschicht einer Hartmetallschneide eines Bohrers zum Bearbeiten harter Materialien, vorzugsweise von Gestein oder Beton, sowie auf einen diesbezüglichen Bohrer.

### Stand der Technik

Bohrer zum Bearbeiten sehr harter Materialien, wie bspw. gehärteter Stahl, Hartguss, faserverstäkten Verbundwerkstoffen, Gestein, Beton o.ä. bestehen üblicherweise aus einem Schaft aus Stahl, der durch Fügen, vorzugsweise mittels Löten oder Schweißen mit einer Schneide oder einer ganzen Bohrkrone aus Hartmetall versehen ist. Diese Schneide oder Krone ist wegen ihrer hohen Härte und des hohen Verschleißwiderstandes von Hartmetall geeignet, harte Werkstoffe zu zertrümmern und teilweise auch zu zerspanen, um dadurch insgesamt einen Werkstoffabtrag zu erreichen. Die Leistungsfähigkeit des Bohrers ist vor allem von den Werkstoffeigenschaften des Hartmetalls bestimmt. Methoden zur Steigerung der Leistungsfähigkeit der Hartmetallschneide beschränken sich bislang auf die geometrische Gestaltung der Schneide, das Gefügedesign des Hartmetalls, im Sinne von Materialzusammensetzung und Korngröße, etc., sowie die Einhaltung vorteilhafter Bohrparameter.

Die Hartmetallschneiden unterliegen beim Bohren einer komplexen Beanspruchung aus der teilweise widersprüchliche Forderungen für die Optimierung des Materials folgen: So verlangt die stark durch schlagartige Beanspruchung, bspw. im Wege des Schlagbohrens geprägte Belastung der Schneide eine ausreichende Zähigkeit des Werkstoffes zur Vermeidung von Sprödbruch in der Schneide. Die Fähigkeit, der stark abrasiven Belastung beim Abarbeiten harter Werkstoffe widerstehen zu können dagegen verlangt eine hohe Härte des Hartmetalls. Dem Bestreben, beide Werkstoffeigenschaften gleichzeitig durch klassische Mittel der Werkstoffentwicklung weiter zu optimieren sind deutliche Grenzen gesetzt. Große Fortschritte werden hier nicht mehr erwartet, da die Werkstoffe als weitgehend ausentwickelt gelten.

Der DE 199 05 735 A1 ist ein Verfahren zum Herstellen eines Zerspanungswerkzeuges zu entnehmen, bei dem es gilt, die Spitze des Bohrwerkzeuges mit einer Hartstoff-Schicht zu beschichten. Ziel ist es, die Haftung zwischen dem Bohrwerkzeug und der Hartstoff-Schicht zu verbessern. Es wird hierzu vorgeschlagen, das Bohrwerkzeug und insbesondere die Bohrspitze vor dem Vorgang der Beschichtung mikrozubestrahlen. Als Strahlmedium dienen hierzu scharfkantige Partikel aus Aluminiumoxyd mit einer Körnungsgröße zwischen 5 µm und 50 µm. Durch das Mikrobestrahlen erhöht sich die Oberflächenrauhigkeit, die wiederum förderlich ist für eine verbesserte Anhaftung einer anschließend auf die aufgeraute Oberfläche aufzubringenden Hartstoff-Schicht, die vorzugsweise im Wege eines PVD-Verfahrens hergestellt wird. Derartige Maßnahmen sind bekannt. Mithin handelt es sich bei dem in dieser Druckschrift beschriebenen Werkzeug um ein Zerspanungswerkzeug, das im Wege eines Gleitvorgangs auf einer zu bearbeitenden Werkstückoberfläche zu einem beabsichtigten Materialabtrag führt. Derartige Werkzeuge unterliegen grundsätzlich einer weit geringeren und andersartigen mechanischen Beanspruchung, als es bei Bohrwerkzeugen der Fall ist.

Die DE 196 52 872 C2, beschreibt ein Verfahren zur Steigerung der Randschichtfestigkeit an Oberflächen von aus sprödharten Werkstoffen, so insbesondere aus keramischen Werkstoffen bestehende Werkstücke.

Aus der DE 101 23 554 A1 geht ein Bearbeitungsverfahren zur Herstellung von Schneidwerkzeugen zum Zerspanen hervor. Es handelt sich hierbei um Werkzeuge, die einer weit geringeren und andersartigen mechanischen Belastbarkeit und somit einem geringeren Verschleiß unterliegen, als Bohrwerkzeuge. Ferner sieht das beispielsweise aus Hartmetall bestehende, bekannte Zerspanungswerkzeug eine zusätzliche Hartstoff-Schicht vor.

Aus der US 3 573 023 A ist ein Verfahren zum Härten von keramischen Materialien, Magnesiumoxyden, Aluminiumoxyden, Gläsern, Silizium, Germanium und Hartmetallen bekannt, welches auf einer Kugelstrahlbehandlung basiert. Einsätze für Gesteinsbohrköpfe können so gehärtet werden.

US 4,674,365 offenbart ein Verfahren zum Oberflächenverfestigen von fertig konturierten Schneidwerkzeugen aus Stahl mittels Kugelstrahlen.

### Darstellung der Erfindung

Der Erfindung liegt daher die Aufgabe zugrunde, Maßnahmen anzugeben, mit denen es möglich ist, Bohrer zum Schlagbohrbearbeiten harter Materialien, vorzugsweise Verbundbohrer mit einer Hartmetallschneide zu versehen, die eine signifikant erhöhte Zähigkeit bei mindestens gleich bleibender Härte ausweist.

Die Lösung der der Erfindung zugrunde liegende Aufgabe ist im Anspruch 1 angegeben. Den Erfindungsgedanken vorteilhaft weiterbildende Merkmale sind Gegenstand der Unteransprüche sowie der weiteren Beschreibung zu entnehmen.

Lösungsgemäß wird ein Verbundbohrer mit einer druckeigenspannungsbelasteten Funktionsfläche aus Hartmetall durch die Kombination der folgenden Verfahrensschritte hergestellt:
Bereistellen eines über eine fertig konturierte Hartmetallschneide verfügenden Bohrers, sowie Behandeln von zumindest einen Teilbereich der fertig konturierten Hartmetallschneide mittels eines mechanischen oberflächigen Energieeintrages derart, dass eine Vielzahl nicht scharfkantiger Werkzeuge, jeweils mit einem Werkzeugdurchmesser von 0,15 mm bis zu 6 mm, vorzugsweise von 0,3 mm bis 4
mm, verwendet wird, die mit einem dosiert eingestellten Eigenimpuls auf wenigstens einen Teilbereich der Hartmetallschneide unter Verrichtung von Deformationsarbeit an der Randschicht des Teilbereiches gerichtet wird, wobei ausschließlich lokale plastische Deformationen in die Randsschicht unter Vermeidung von Rissbildungen innerhalb der Randschicht des behandelten Teilbereichs der Hartmetallschneide eingebracht werden.

Vorteilhafter Weise wird zunächst in an sich bekannter Weise ein Stahlschaft mit einer fertig konturierten Schneide bzw. einer Krone aus Hartmetall durch Fügen verbunden. Fertig konturiert bedeutet in diesem Zusammenhang, dass keine weiteren die Schneide schärfenden Behandlungs- oder die Schneide mit zusätzlichen Schichten zu versehenden Beschichtungsschritte unternommen werden. Anschließend erfolgt eine Iösungsgemäße Oberflächenbehandlung der Funktionsflächen der Hartmetallschneide bzw. der der Hartmetallkrone durch einen auf die Funktionsfläche gerichteten mechanischen Energieeintrag mit an die Beschaffenheit der Funktionsfläche, bezüglich des Werkstoffes und Geometrie, angepassten Behandlungsparametern derart, dass ausschließlich lokale plastische Deformationen in der Randschicht eingebracht werden.

Diese Behandlung erhöht die Bruchzähigkeit und, in einem etwas geringem Maße auch die Härte in der der Randschicht des Hartmetalls. Um die Einstellung der für den Erfolg des Verfahrens notwendigen Behandlungsparameter vorzunehmen, gilt es vorzugsweise drei Vorversuche durchzuführen:
Bspw. an einer Platte aus dem für die Funktionsfläche verwendeten Werkstoff wird die Abhängigkeit der Druckfließgrenze und der Sprödbruchgrenze des Werkstoffs von der Werkzeuggeometrie jener Werkzeuge, mit denen die Funktionsfläche lokal deformiert wird, ermittelt, woraus eine erforderliche Werkzeuggeometrie, die erforderliche und maximal zulässige Kraft auf das Werkzeug sowie die Härte des mit der Funktionsfläche in Kontakt gelangenden Werkzeugbereichs bestimmt werden.

In einem zweiten Schritt wird im Rahmen eines mehrfachen Kugeldruckversuches ermittelt, welche Anzahl von wiederholten Kugeleindrücken pro Kontaktfläche zulässig ist, ohne dabei die Integrität der Randschicht der Funktionsfläche zu schädigen, aber zugleich die Randschicht plastisch zu verformen. Auf diese Weise wird der zulässige Überdeckungsgrad, d.h. die Anzahl der Werkzeugeindrücke pro Kontaktfläche festgelegt.

In einem dritten Schritt wird durch die Behandlung eine Probe mit kantenartigen Geometrieanteilen ermittelt, an Hand der die im Wege der Vorversuche ermittelten Behandlungsparameter zur Vermeidung einsatzrelevanter Veränderungen der Funktionsflächengeometrie weiter begrenzt werden.

Als Werkzeugmaterial wird vorzugsweise ein Werkstoff mit ähnlicher oder höherer Härte gewählt, wie sie der für die Funktionsflächen des Bohrers verwendete Werkstoff selbst besitzt. Als Werkzeugform wird für den Kontaktbereich zwischen Werkzeug und Funktionsfläche eine möglichst glatte, abgerundete Form gewählt. Nicht notwendigerweise sind die Werkzeuggeometrien auf die Kugelform zu beschränken, auch eigenen sich nicht scharfkantigen Strahlmittel von rundlicher, bspw. ellipsoider o.ä. Gestalt. Nach Festlegung der vorstehend beschriebenen Behandlungsparameter wird die zu behandelnde Funktionsfläche aus Hartmetall, beispielsweise im Rahmen eines Kugelstrahlverfahrens, behandelt. Die auf die Funktionsfläche auftreffenden kugelförmigen Werkzeugelemente können im Rahmen einer Strahlanlage per Druckluft oder mittels eines Schleuderradantriebes auf die Funktionsfläche mit einstellbarem kinetischen Impuls geschleudert werden, so dass jede Stelle der zu behandelnden Funktionsfläche ein- oder mehrfach getroffen wird.

Das mechanische Verfahren beruht insbesondere darauf, dass die Funktionsfläche mit einem geeigneten Werkzeug lokal plastisch verformt wird und in der Randschicht Druckeigenspannungen erzeugt werden. Wesentlich bei der Durchführung der mechanischen Oberflächenbehandlung ist, dass bei der Erzeugung plastischer Oberflächenverformungen nicht gleichzeitig Schädigungen in Form von Sprödbruchvorgängen oder Materialermüdung in der Funktionsflächefläche erzeugt werden, deren die Festigkeit mindernde Wirkung größer ist, als die die Festigkeit steigernde Wirkung durch die durch die "Plastifizierung" bewirkten Druckeigenspannungen und dass die Geometrie der Funktionsfläche nicht in unzulässigem Maße verändert wird.

Die vorstehend genannte Forderung wird dadurch erreicht, dass zum einen die plastische Verformung auf lateral eng begrenzte Funktionsflächenbereiche beschränkt ist und zum anderen dadurch, dass das Werkzeug, mit dem die Funktionsfläche des zu behandelnden Werkstückes in Kontakt tritt, eine bestimmte Kontur im Bereich der Kontaktfläche aufweist, die allgemein beschrieben als nicht scharfkantig anzusehen ist.

Wird ein materialspezifischer und von der Form des Werkzeuges abhängiger Grenzwert für die Kontaktfläche zwischen Werkzeug und Schichtoberfläche sowie für die Eindrucktiefe des Werkzeuges in die Randschicht nicht überschritten, so kann durch eine wiederholte, lateral versetzte lokale Oberflächenbehandlung der gewünschte Effekt, einer gezielt eingebrachten plastischen Verformung, oberflächendeckend erreicht werden.

Die vorstehend beschriebene Forderung wird insbesondere dadurch erfüllt, dass das Werkzeug eine geeignete Geometrie aufweist, die vorzugsweise von runder Kontur ist und einen vom Werkstoff der zu bearbeitenden Funktionsflächefläche abhängigen kritischen Werkzeugdurchmesser nicht überschreitet. Für den Fall einer Kugel, wie sie bei Kugelstrahlversuchen zum Einsatz kommen und der Verwendung von Hartmetall als Schichtmaterial haben sich geeignete Kugeldurchmesser von maximal 6 mm herausgestellt. Der vorstehend genannte kritische Durchmesser, der für die Dimensionierung der Kugel bestimmend ist, definiert auch den eng begrenzten Oberflächenbereich, innerhalb dem die plastische Verformung auf der Funktionsfläche zu erfolgen hat.

Neben der geometrischen Dimensionierung der Werkzeuge, mit denen die Funktionsfläche bearbeitet wird, und hierbei sind alternativ zum Kugelstrahlen auch Hämmer, Nägel und Walzen zu nennen, spielt insbesondere beim Kugelstrahl Verfahren der auf die Funktionsfläche einwirkende kinetische Impuls eine große Rolle. Die Geometrie des Werkzeuges sowie die Impulseinstellung, mit der das Werkzeug gegen die zu bearbeitende Oberfläche trifft, sind dabei derart einzustellen, dass die erwünschte plastische Verformung vor dem vorzugsweise nicht zu erfolgenden Sprödbruch bzw. einer Werkstoffermüdüng erfolgt, d.h. die Höhe des Impulseintrages und die Anzahl der Treffer pro Stelle sind so zu bemessen, dass das Ausmaß von eventuell eintretenden Schädigungen so weit begrenzt wird, dass der positive Einfluss der plastischen Verformung und der Eigenspannungserzeugung auf die Festigkeit und Zähigkeit im Bereich der Funktionsflächen überwiegt. Durch die lösungsgemäße Beaufschlagung der Funktionsflächen mit Druckeigenspannungen im Wege bspw. eines vorstehend erläuterten Kugelstrahlverfahrens werden die Werkstoff bedingt begrenzten Festigkeits- und Zähigkeitseigenschaften der für die Funktionsflächen eingesetzten Hartmetallwerkstoffe signifikant verbessert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Ein Diagrammbeispiel für den tiefenabhängigen Eigenspannungsverlauf innerhalb einer Funktionsrandschicht mit lösungsgemäßer Behandlung.
- Fig. 2:: Härteeindrücke in Funktionsflächen vor und nach Kugelstrahlbehandlung
- Fig. 3:: Biegefestigkeit zweier Funktionsflächenwerkstoffe vor und nach der Strahlbehandlung

### Wege zur Ausführung der Erfindung, gewerbliche Verwendbarkeit

An Flachproben aus Funktionsflächenrelevantem Werkstoff wurden Kugelstrahlbehandlungen durchgeführt.

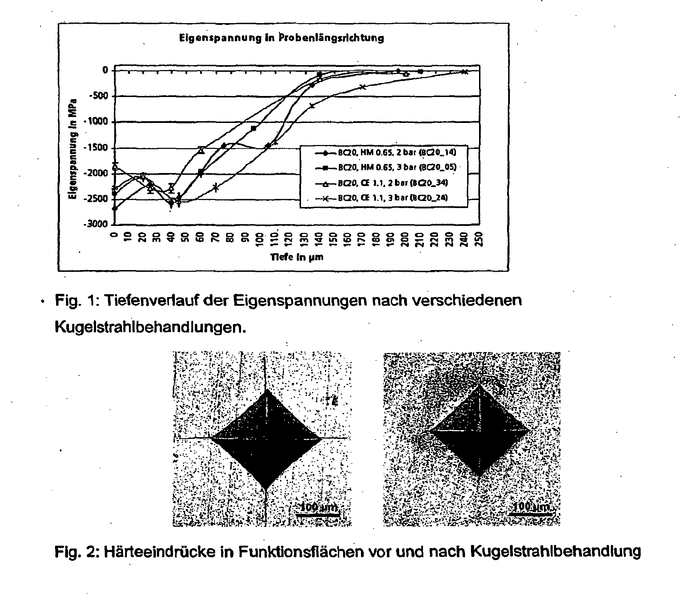

Die durch die Behandlung erzeugten Eigenspannungen innerhalb der Randschicht wurden mittels schrittweisem elektrolytischen Abtrag und röntgenographischen Messungen ermittelt. In Figur 1a ist sind die günstigen, außerordentlich hohen Druckeigenspannungen von bis zu 2000 MPa gezeigt, die in etwa 140 µm Tiefe auf den näherungsweise eigenspannungsfreien Zustand des unbehandelten Grundwerkstoffs abfallen.

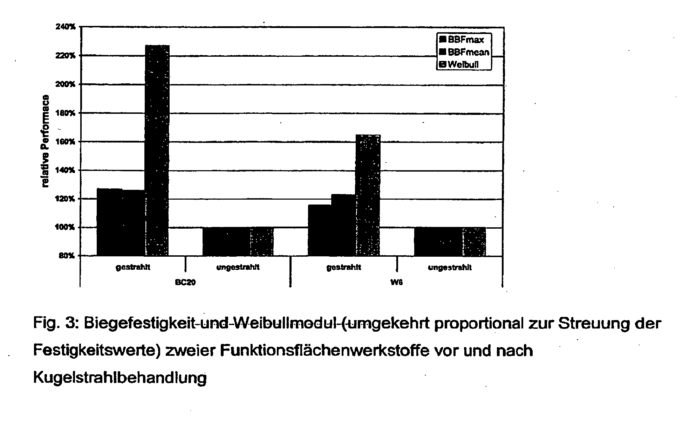

Die vorteilhafte Wirkung der Behandlung hinsichtlich der erfindungsgemäßen Zielsetzung, der Verbesserung der mechanischen Eigenschaften der Funktionsfläche ist in Fig. 2 und Fig. 3 gezeigt.

Es wird eine Erhöhung der Bruchzähigkeit der Funktionsfläche um mindestens den Faktor 2 erreicht. In den behandelten Funktionsflächen konnten durch Härteeindrücke keine für die Zähigkeitsermittlung geeigneten Risse mehr erzeugt werden, siehe Fig. 2, linke Darstellung.

Die Ermittlung der Biegefestigkeit behandelter (gestrahlt) und unbehandelter (ungestrahlt) Probestäbchen ergab eine Erhöhung der Biegefestigkeit (BBF) von 2100 MPa auf 2600 MPa. Dies entspricht einer Steigerung von bis zu 27% (Fig. 3).

Weiterhin konnte durch metallographische Untersuchungen gezeigt werden, dass lösungsgemäß behandelte Randschichten keine durch die Behandlung verursachten Schädigungen auswiesen.

## Patentansprüche

1. Verfahren zur Erhöhung der Bruchzähigkeit der Randschicht einer Hartmetallschneide eines Bohrers zum Schlagbohrbearbeiten harter Materialien, vorzugsweise von Gestein oder Beton, **gekennzeichnet durch** die Kombination folgender Verfahrensschritte:
- Bereistellen eines über eine fertig konturierte Hartmetallschneide verfügenden Bohrers,
- Behandeln von zumindest einen Teilbereich der fertig konturierten Hartmetallschneide mittels eines mechanischen oberflächigen Energieeintrages derart, dass eine Vielzahl nicht scharfkantiger Werkzeuge, jeweils mit einem Werkzeugdurchmesser von bis zu 6 mm, verwendet wird, die mit einem dosiert eingestellten Eigenimpuls auf wenigstens einen Teilbereich der Hartmetallschneide unter Verrichtung von Deformationsarbeit an der Randschicht des Teilbereiches gerichtet wird, wobei ausschließlich lokale plastische Deformationen in die Randsschicht unter Vermeidung von Rissbildungen innerhalb der Randschicht des behandelten Teilbereichs der Hartmetallschneide eingebracht werden.

2. Verfahren nach Anspruch 1,
**dadurch gekennzeichnet, dass** die nicht scharfkantigen Werkzeuge von runder Gestalt und aus einem Material gefertigt wind, das eine vergleichbare oder höhere Härte aufweist als das Material der Hartmetallschneide.

3. Verfahren nach Anspruch 1 oder 2,
**dadurch gekennzeichnet, dass** die Vielzahl nicht scharfkantiger Werkzeuge mittels Kugelstrahlverfahren auf den wenigstens einen Teilbereich der Hartmetallschneide gerichtet wird.

4. Verfahren nach einem der Ansprüche 1 bis 3,
**dadurch gekennzeichnet, dass** als nicht scharfkantige Werkzeuge Kugeln verwendet werden.

5. Verfahren nach Anspruch 1 oder 4,
**dadurch gekennzeichnet, dass** als nicht scharfkantige Werkzeuge Hämmer, Nägel oder Walzen verwendet werden.

6. Verfahren nach einem der Ansprüche 1 bis 5,
**dadurch gekennzeichnet, dass** für den mechanischen oberflächigen Energieeintrag folgende Behandlungsparameter in Abhängigkeit von Form und Material der zu behandelnden Hartmetallschneide bestimmt werden: Material und Form der nicht scharfkantigen Werkzeuge sowie der Eigenimpuls der auf den wenigstens einen Teilbereich der Hartmetallschneide gerichteten Werkzeuge.

7. Verfahren nach Anspruch 6,
**dadurch gekennzeichnet, dass** zur Bestimmung der maßgeblichen Behandlungsparameter folgende Verfahrensschritte durchgeführt werden:
- An einem Stück aus dem zu behandelnden Hartmetall wird die Abhängigkeit der Druckfließgrenze und der Sprödbruchgrenze von der Form, dem Material sowie dem Eigenimpuls der Werkzeuge ermittelt, mit dem die Werkzeuge auf das Stück auftreffen, und Mittels eines Kugeldruckversuches wird eine Anzahl zulässiger Kugeleindrücke pro Kontaktfläche an dem Stück aus dem zu behandelnden Hartmetall ermittelt, durch die ein zulässiger Überdeckungsrad an lokaler plastischer Oberflächenverformungen festgelegt wird.

8. Verfahren nach Anspruch 7,
**dadurch gekennzeichnet, dass** die maßgeblichen Behandlungsparameter an wenigstens einer Probe mit an die zu behandelnde Hartmetallschneide angepassten kantenartigen Geometrieanteilen zu Zwecken der Vermeidung von Rissbildungen innerhalb der Randschicht der Probe überprüft werden.

9. Verfahren nach einem der Ansprüche 1 bis 8,
**dadurch gekennzeichnet, dass** als Bohrer ein Verbundbohrer verwendet wird, der einen Schaft aufweist, an den die Hartmetallschneide gefügt wird bevor die Hartmetallschneide oberflächenbehandelt wird.

10. Verfahren nach einem der Ansprüche 1 bis 9,
**dadurch gekennzeichnet, dass** die Hartmetallschneide als Hartmetallkrone ausgebildet ist.

11. Verfahren nach einem der Ansprüche 1 bis 10,
**dadurch gekennzeichnet, dass** nicht scharfkantige Werkzeuge, jeweils mit einem Werkzeugdurchmesser von 0,15 mm bis zu 6 mm, vorzugsweise von 0,3 mm bis 4 mm, verwendet werden.

## Claims

1. A method of increasing the fracture toughness of the outer layer of a carbide cutting edge of a drill bit used for impact drilling hard materials, particularly rock or concrete, **characterized by** the combination of the following method steps:
- providing a drill bit having a pre-contoured carbide cutting edge,
- treating at least a partial area of the pre-contoured carbide cutting edge by the application of mechanical energy to the surface in such a way that a plurality of tools with no sharp edges, each having a tool diameter of up to 6 mm, is used, these being directed, with a predetermined intrinsic impulse, onto at least a partial area of the carbide cutting edge, thus performing deformation work in respect of the outer layer of the partial area, with only local plastic deformation being introduced into the outer layer, and preventing the formation of cracks within the outer layer of the treated partial area of the carbide cutting edge.

2. A method according to Claim 1,
**characterized in that** the tools having no sharp edges are round in shape and made of a material having a comparable or greater hardness than the material of the carbide cutting edge.

3. A method according to Claim 1 or 2,
**characterized in that** the plurality of tools having no sharp edges are directed onto the at least one partial area of the carbide cutting edge by means of a shot peening process.

4. A method according to one of Claims 1 to 3,
**characterized in that** spherical balls (shots) are used as the tools having no sharp edges.

5. A method according to Claim 1 or 4,
**characterized in that** hammers, nails or rollers are used as the tools having no sharp edges.

6. A method according to one of Claims 1 to 5,
**characterized in that**, for the mechanical surface application of energy, the following treatment parameters are determined dependent on the shape and material of the carbide cutting edge to be treated: material and shape of the tools having no sharp edges as well as the intrinsic impulse of the tools directed onto at least one partial area of the carbide cutting edge.

7. A method according to Claim 6,
**characterized in that**, for determining the relevant treatment parameters, the following method steps are carried out:
- using a piece of the carbide to be treated, the dependence of the compression yield point and the brittle fracture limit on the shape and material as well as on the iritrinsic impulse of the tools with which they strike the piece, is determined, and, by means of a ball indentation test, a number of admissible ball impressions per contact surface of the piece of the carbide to be treated is determined, by means of which an admissible degree of overlap in respect of local plastic surface deformations is established.

8. A method according to Claim 7,
**characterized in that** the relevant treatment parameters are tested, using at least one sample having edge geometry portions con-esponding to the carbide cutting edge to be treated, for the purpose of preventing the formation of cracks within the outer layer of the sample.

9. A method according to one of Claims 1 to 8,
**characterized in that** a composite drill bit is used as the drill bit, this having a shank onto which the carbide cutting edge is fitted before the carbide cutting edge is surface-treated.

10. A method according to one of Claims 1 to 9,
**characterized in that** the carbide cutting edge takes the form of a carbide crown.

11. A method according to one of Claims 1 to 10,
**characterized in that** tools with no sharp edges are used, each having a tool diameter of between 0.15 mm and 6 mm, and preferably of between 0.3 mm and 4 mm.

## Revendications

1. Procédé pour augmenter la résistance à la rupture de la couche superficielle d'un tranchant en métal dur d'un foret pour le façonnage à la perceuse à percussion de matériaux durs, de préférence de roche ou de béton, **caractérisé par** la combinaison des étapes suivantes :
- fourniture d'un foret disposant d'un tranchant en métal dur, à profil fini,
- traitement d'au moins une zone partielle du tranchant en métal dur à profil fini, au moyen d'un apport d'énergie mécanique superficiel, de façon à utiliser une pluralité d'outils sans arêtes vives, chacun ayant un diamètre d'outil allant jusqu'à 6 mm, qui est dirigée, grâce à une impulsion propre ajustée d'une manière dosée, sur au moins une zone partielle du tranchant en métal dur, par exécution d'un travail de déformation sur la couche superficielle de la zone partielle, des déformations plastiques exclusivement locales étant introduites dans la couche superficielle en évitant la formation de fissures à l'intérieur de la couche superficielle de la zone partielle traitée du tranchant en métal dur.

2. Procédé selon la revendication 1, **caractérisé en ce que** les outils sans arêtes vives sont réalisés avec une forme arrondie et en un matériau qui présente une dureté comparable ou supérieure à celle du matériau du tranchant en métal dur.

3. Procédé selon la revendication 1 ou 2, **caractérisé en ce que** la pluralité d'outils sans arêtes vives est dirigée par un procédé par grenaillage sur la ou les au moins zones partielles du tranchant en métal dur.

4. Procédé selon l'une des revendications 1 à 3, **caractérisé en ce que** des billes sont utilisées comme outils sans arêtes vives.

5. Procédé selon la revendication 1 ou 4, **caractérisé en ce que** des marteaux, des clous ou des cylindres sont utilisés comme outils sans arêtes vives.

6. Procédé selon l'une des revendications 1 à 5, **caractérisé en ce que**, pour l'apport d'énergie mécanique superficiel, on détermine les paramètres de traitement suivants, en fonction de la forme et du matériau du tranchant en métal dur à traiter : matériau et forme des outils sans arêtes vives, ainsi que l'impulsion propre des outils dirigés vers la ou les zones partielles du tranchant en métal dur.

7. Procédé selon la revendication 6, **caractérisé en ce que**, pour déterminer les paramètres de traitement pertinents, on met en oeuvre les étapes suivantes :
- sur une pièce constituée du métal dur à traiter, on détermine la relation entre la limite élastique sous pression et la limite de rupture fragile et la forme, le matériau, ainsi que l'impulsion propre des outils, avec laquelle les outils viennent heurter la pièce, et, à l'aide d'un essai de dureté à bille, on détermine un nombre d'empreintes de billes autorisées par aire de contact sur la pièce constituée du matériau dur à traiter, nombre grâce auquel on détermine un degré de recouvrement admissible au niveau des déformations superficielles plastiques locales.

8. Procédé selon la revendication 7, **caractérisé en ce que** les paramètres de traitement pertinents sont vérifiés sur au moins une éprouvette présentant des éléments géométriques à arêtes, adaptés au tranchant en métal dur à traiter, et ce, dans le but d'éviter la formation de fissures à l'intérieur de la couche superficielle de l'éprouvette.

9. Procédé selon l'une des revendications 1 à 8, **caractérisé en ce qu'**on utilise comme foret, un foret composite, qui comprend une tige à laquelle le tranchant en métal dur est assemblé avant que le tranchant en métal dur ne subisse un traitement superficiel.

10. Procédé selon l'une des revendications 1 à 9, **caractérisé en ce que** le tranchant en métal dur est réalisée sous la forme d' une couronne en métal dur.

11. Procédé selon l'une des revendications 1 à 10, **caractérisé en ce qu'**on utilise des outils sans arêtes vives dont chacun a un diamètre d'outil de 0,15 à 6 mm, de préférence de 0,3 à 4 mm.
